# EUROPEAN PATENT APPLICATION

(11) **EP 2 325 935 A1**
(43) Date of publication of application: **25.05.2011**
(21) Application number: 09812878.8
(22) Date of filing: 09.09.2009
(51) Int. Cl.: H01M 8/04, G01F 23/26, H01M 8/06, H01M 8/10

(54) **FUEL BATTERY SYSTEM**

(30) Priority: 11.09.2008 JP 2008233203
(71) Applicant: Panasonic Corporation, Kadoma-shi Osaka 571-8501 (JP)
(72) Inventor: MITSUI, Maskai, Chuo-ku, Osaka-shi, Osaka, 540-6207 (JP); KIMURA, Tadao, Chuo-ku, Osaka-shi, Osaka, 540-6207 (JP); KOZU, Katsumi, Chuo-ku, Osaka-shi, Osaka, 540-6207 (JP)
(74) Representative: Schwabe - Sandmair - Marx
(86) International application number: PCT/JP2009/004453
(87) International publication number: WO 2010/029729

(57) **Abstract**

A fuel cell system of the present invention has a separation unit for separating gas-liquid mixed fluid discharged from the fuel cell stack. The separation unit has a tank for storing the separated liquid. A pair of metal electrodes is disposed on the side surfaces of the tank opposed to each other. The electrodes are used to measure the amount of the liquid in the tank and also promote the heat dissipation of the liquid in the tank. This can suppress the transpiration of the liquid in the tank and cool the liquid to a temperature suitable for the reuse in the fuel cell stack.

## Description

### TECHNICAL FIELD

The present invention relates to a fuel cell system, and more particularly to control of temperature inside the separation unit that separates liquid from gas-liquid mixed fluid discharged from the fuel cell.

### BACKGROUND ART

In recent years, the number of portable and cordless electronic devices has been increasing rapidly. As the driving power supply for these electronic devices, there is an increasing demand for small, lightweight secondary cells having large energy density. The technical development is accelerated not only in small secondary cells for household use but also in large secondary cells for power storage, electric vehicles, or the like that requires durability and safety for an extended period of time. Further, fuel cells that can be continuously used for an extended period of time by fuel supply are receiving more attention than secondary cells that require charging.

A fuel cell system includes a fuel cell stack having a cell stack, a fuel supplier for supplying a fuel to this cell stack, and an oxidizing agent supplier for supplying an oxidizing agent. The cell stack has the following structure. A membrane electrode assembly has an anode electrode, a cathode electrode, and an electrolyte membrane interposed between these electrodes. The membrane electrode assemblies and separators are laminated, and end plates are disposed on both ends in the direction of lamination.

As such a fuel cell stack, a direct methanol fuel cell (DMFC) is developed. The DMFC uses a methanol aqueous solution as the fuel, and oxygen in the air as the oxidizing agent. Therefore, from each anode electrode, carbon dioxide, i.e. a reaction product, and unreacted methanol and water, i.e. the residue of the fuel, are discharged. Typically, the discharged aqueous solution is returned to the fuel supplier. On the other hand, from each cathode electrode, water and water vapor, i.e. reaction products, are discharged together with nitrogen, unreacted oxygen, and the like having passed through the cathode electrode. Water is consumed in the reaction in the anode electrode, and thus the water produced in the cathode electrode may be returned to the fuel supplier. By circulating the liquid components discharged from the fuel cell stack in this manner, the portability of the fuel cell system is improved.

The substances discharged from the fuel cell stack are not returned directly to the fuel supplier. Instead, after the gas components and the liquid components have been separated, the liquid components are stored in a tank, and a necessary amount is supplied to the fuel supplier. For this purpose, it is necessary to control the amount of the stored liquid components.

In order to detect the amount of the substances discharged from the fuel cell stack and stored in the tank as described above, a method is proposed (see Patent Literature 1, for example). In this method, a pair of electrodes is disposed on the tank and the amount of the fuel stored is detected based on a change in the capacitance between these electrodes.

However, the fuel cell stack is operated at high temperatures, and thus the temperatures of the discharged substances are also high. Therefore, the temperature of the liquid components stored in the above tank also rises. This raises the vapor pressure inside the tank, and evaporates the liquid components. As a result, the liquid components may circulate to the fuel supplier insufficiently in some cases. Further, in order to operate the fuel cell stack generating reaction heat, at a constant temperature, it is necessary to lower the temperature of the liquid components to be circulated to the fuel supplier to some extent.

### Citation List

### Patent Literature

Patent Literature 1: Japanese Patent Unexamined Publication No. 2007-220453

### SUMMARY OF THE INVENTION

The present invention is directed to detect the amount of liquid components stored in a tank and cool the liquid components in the tank. For this purpose, a fuel cell system of the present invention includes a fuel cell stack including a membrane electrode assembly, a first supplier, a second supplier, a separation unit, and a pair of metal electrodes. The membrane electrode assembly is formed of a laminate of an anode electrode, a cathode electrode, and an electrolyte membrane interposed between the anode electrode and the cathode electrode. The first supplier supplies a fuel to the anode electrode. The second supplier supplies a gas containing an oxidizing agent to the cathode electrode. The separation unit has a gas-liquid separation membrane and a tank. The gas-liquid separation membrane separates liquid from gas-liquid mixed fluid that is formed of at least one of the reaction product generated in the anode electrode and the residue of the fuel, and the reaction product generated in the cathode electrode and the gas having passed through the cathode electrode. The tank holds the separated liquid. Electrodes are disposed along the side surfaces of the tank opposed to each other. The electrodes are used to measure the amount of the liquid in the tank and also promote the heat dissipation of the liquid in the tank. This can suppress the transpiration of the liquid in the tank and cool the liquid to a temperature suitable for the reuse in the fuel cell stack. By controlling the stored amount and the temperature of the liquid to be circulated to the fuel supply side in this manner, the portability of the fuel cell system is improved.

### BRIEF DESCRIPTION OF DRAWINGS

Fig. 1 is a block diagram showing a structure of a fuel cell system in accordance with an exemplary embodiment of the present invention.
Fig. 2 is a conceptual sectional view showing a schematic structure of an essential part of a fuel cell stack for use in the fuel cell system of Fig. 1.
Fig. 3A is a perspective view of a separation unit in the fuel cell system of Fig. 1.
Fig. 3B is a vertical sectional view of the separation unit in the fuel cell system of Fig. 1.
Fig. 4 is a block circuit diagram showing a configuration of a calculator in the fuel cell system of Fig. 1.
Fig. 5 is a waveform chart in the block circuit diagram of Fig. 4.
Fig. 6 is a perspective view showing other electrodes for use in the fuel cell system in accordance with the exemplary embodiment of the present invention.
Fig. 7 is a vertical sectional view showing another tank of the separation unit for use in the fuel cell system in accordance with the exemplary embodiment.
Fig. 8 is a vertical sectional view showing still another tank of the separation unit for use in the fuel cell system in accordance with the exemplary embodiment.
Fig. 9 is a vertical sectional view showing yet another tank of the separation unit for use in the fuel cell system in accordance with the exemplary embodiment.

### DETAILED DESCRIPTION OF PREFERRED EMBODIMENTS

Hereinafter, a description is provided for an exemplary embodiment of the present invention, using a direct methanol fuel cell (DMFC) as an example, with reference to the accompanying drawings. The present invention is not limited to the following description as long as the invention is based on the basic features described herein.

### EXEMPLARY EMBODIMENT

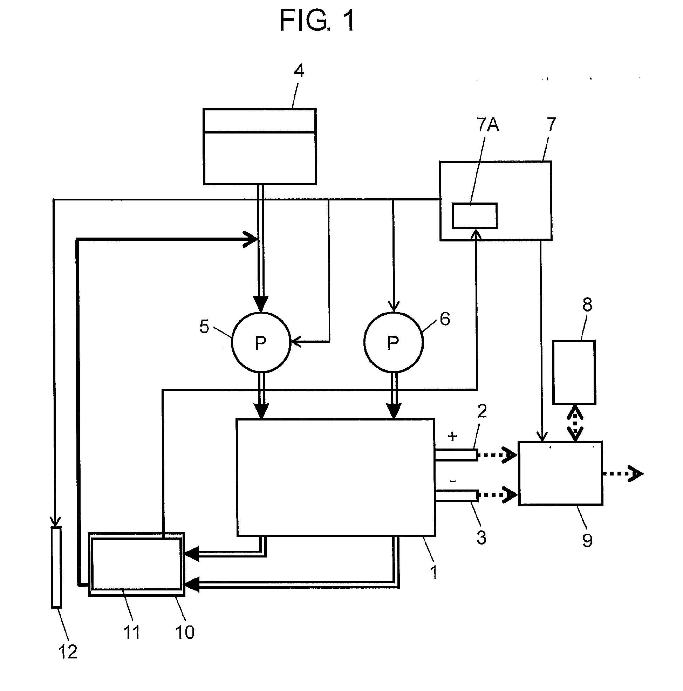

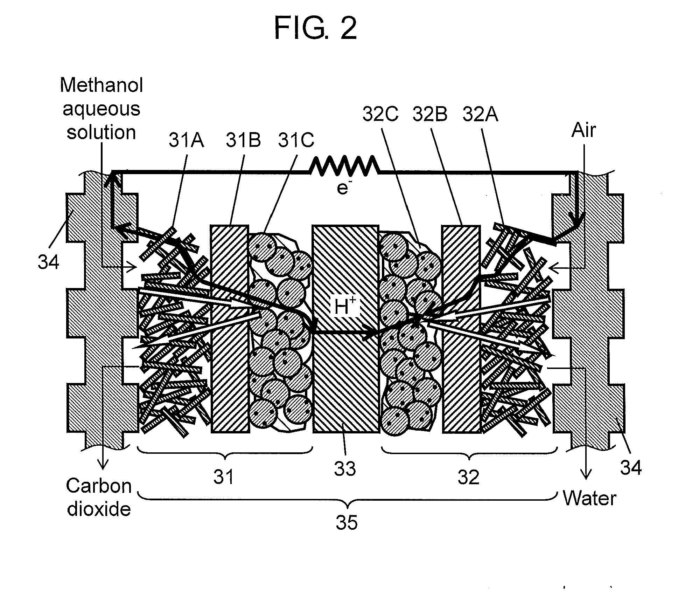

A description is provided for a basic structure of a fuel cell system in accordance with the exemplary embodiment of the present invention, with reference to Fig. 1 and Fig. 2. Fig. 1 is a block diagram showing a structure of a fuel cell system in accordance with the exemplary embodiment of the present invention. Fig. 2 is a conceptual sectional view showing a schematic structure of an essential part of a fuel cell stack for use in the fuel cell system in accordance with the exemplary embodiment of the present invention.

This fuel cell system includes fuel cell stack 1, fuel tank 4, fuel pump 5, air pump 6, controller 7, power storage unit 8, DC/DC converter 9, separation unit 10, a pair of electrodes 11, and cooler 12 having a fan. Fuel cell stack 1 has membrane electrode assemblies (MEAs) 35 as electromotive parts. The generated electric power is output from positive electrode terminal 2 and negative electrode terminal 3. The output electric power is input to DC/DC converter 9. Fuel pump 5 supplies a fuel in fuel tank 4 to anode electrodes 31 in fuel cell stack 1. Air pump 6 supplies air containing oxygen as an oxidizing agent, to cathode electrodes 32 in fuel cell stack 1. Controller 7 controls the driving of fuel pump 5 and air pump 6, and controls DC/DC converter 9 so as to control the output to the outside and the charge/discharge of power storage unit 8. Fuel tank 4, fuel pump 5, and controller 7 constitute a first supplier configured to supply the fuel to anode electrodes 31 in fuel cell stack 1. Air pump 6 and controller 7 constitute a second supplier configured to supply the gas containing the oxidizing agent to cathode electrodes 32 in fuel cell stack 1. The first supplier and the second supplier are not limited to the above structures.

As shown in Fig. 2, a methanol aqueous solution as the fuel is supplied to each anode electrode 31, and air is supplied to each cathode electrode 32. Each MEA 35 is formed of a laminate of anode electrode 31, cathode electrode 32, and electrolyte membrane 33 interposed between anode electrode 31 and cathode electrode 32.

Anode electrode 31 is formed of a laminate of diffusion layer 31A, microporous layer (MPL) 31B, and catalyst layer 31C in order from the side of separator 34. Similarly, cathode electrode 32 is formed of a laminate of diffusion layer 32A, microporous layer (MPL) 32B, and catalyst layer 32C in order from the side of separator 34. Positive electrode terminal 2 is electrically connected to each cathode electrode 32, and negative electrode terminal 3 is electrically connected to each anode electrode 31. Each of diffusion layers 31A and 32A is formed of carbon paper, carbon felt, carbon cloth, or the like. Each of MPLs 31B and 32B is made up of polytetrafluoroethylene or tetrafluoroethylene/hexafluoropropylene copolymer, and carbon, for example. Each of catalyst layers 31C and 32C is formed by highly dispersing a catalyst suitable for the corresponding electrode reaction, such as platinum and ruthenium, on the surface of carbon, and binding the catalyst bodies with a binder. Electrolyte membrane 33 is formed of a hydrogen ion-permeable ion exchange membrane, such as a membrane of perfluorosulfonic acid/tetrafluoroethylene copolymer.

Next, an operation in fuel cell stack 1 is briefly described. As shown in Fig. 1 and Fig. 2, an aqueous solution containing methanol is supplied to each anode electrode 31 by fuel pump 5. On the other hand, air pressurized by air pump 6 is supplied to each cathode electrode 32. The methanol aqueous solution as the fuel supplied to anode electrode 31 and methanol and water vapor from the aqueous solution are diffused in diffusion layer 31A over the entire surface of MPL 31B. These substances further pass through MPL 31B and reach catalyst layer 31C.

On the other hand, oxygen contained in the air supplied to cathode electrode 32 is diffused in diffusion layer 32A over the entire surface of MPL 32B. Oxygen further passes through MPL 32B and reaches catalyst layer 32C. Methanol that has reached catalyst layer 31C reacts as shown in chemical formula (1), and oxygen that has reached catalyst layer 32C reacts as shown in chemical formula (2).

CH₃OH + H₂O→ CO₂ + 6H⁺ + 6e⁻ (1)

3/2O₂ + 6H⁺ + 6e⁻ → 3H₂O (2)

As a result, electric power is generated. Further, carbon dioxide is generated on the anode electrode 31 side and water is generated on the cathode electrode 32 side, as reaction products.

From anode electrode 31, carbon dioxide, i.e. a reaction product, and unreacted methanol and water, i.e. the residue of the fuel, are discharged. The discharged aqueous solution is returned to fuel pump 5 via separation unit 10. On the other hand, from cathode electrode 32, water and water vapor, i.e. reaction products, gas not involved in the reaction such as nitrogen and unreacted oxygen having passed through cathode 32. are discharged.

Water is consumed in the reaction in anode electrode 31, and thus the water generated in cathode 32 is returned to fuel pump 5 via separation unit 10. By circulating the liquid components discharged from fuel cell stack 1 in this manner, the concentration of the methanol aqueous solution as the fuel can be adjusted. As a result, the supply of water from the outside is unnecessary, and the discharge (disposal) of water as a reaction product to the outside is also unnecessary. This improves the portability of the fuel cell system.

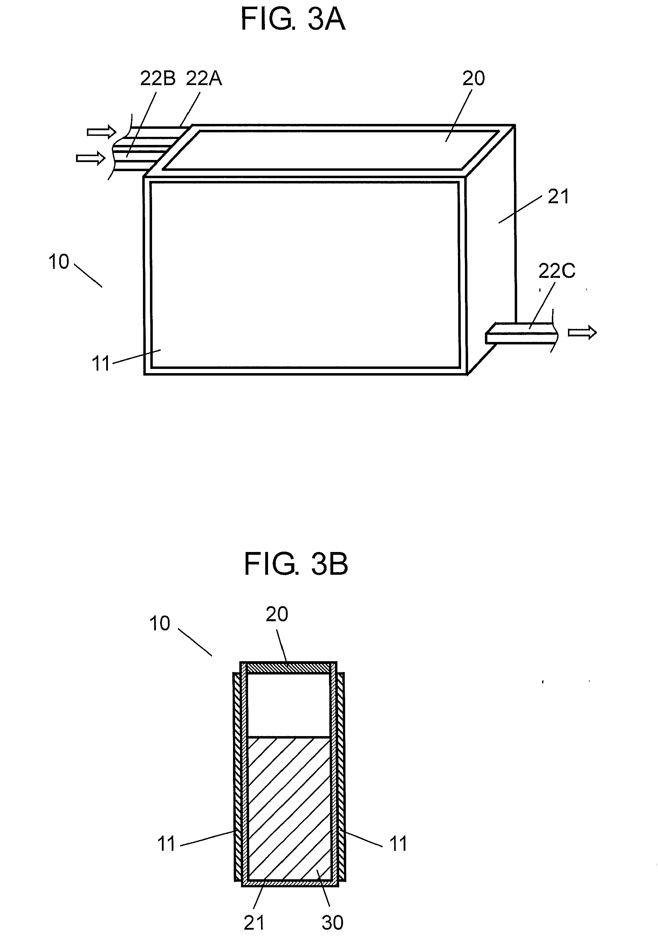

Next, a description is provided for the structure of separation unit 10 in the fuel cell system of Fig. 1, with reference to Fig. 3A and Fig. 3B. Fig. 3A is a perspective view of separation unit 10, and Fig. 3B is a vertical sectional view of separation unit 10. Separation unit 10 has gas-liquid separation membrane 20, tank 21, introduction pipes 22A and 22B, and discharge pipe 22C. Gas-liquid separation membrane 20 is disposed on the top surface of tank 21. Introduction pipes 22A and 22B are connected to the upper part of tank 21. Discharge pipe 22C is connected to the lower part of tank 21. Gas-liquid separation membrane 20 can be formed of a porous sheet made of fluororesins, such as polytetrafluoroethylene (PTFE), tetrafluoroethylene/perfluoro alkyl vinyl ether copolymer (PFA), and tetrafluoroethylene/hexafluoropropylene copolymer (FEP). Alternatively, a sheet made of carbon fiber, for example, coated with these fluororesins in the form of cloth, paper, or non-woven fabric can be used as gas-liquid separation membrane 20. Tank 21 is made of insulating materials, such as resins and ceramics.

Carbon dioxide, i.e. a reaction product generated in anode electrode 31, and water containing unreacted methanol, i.e. the residue of the fuel, flow from introduction pipe 22A into separation unit 10. On the other hand, water and water vapor, i.e. reaction products generated in cathode electrode 32, and the gas having passed through cathode electrode 32 flow from introduction pipe 22B into separation unit 10. Gas-liquid separation membrane 20 separates a dilute methanol aqueous solution, i.e. liquid 30, from the gas-liquid mixed fluid made up of the above substances. The separated gas components are discharged from gas-liquid separation membrane 20 to the outside. On the other hand, separated liquid 30 is temporarily stored in tank 21. That is, tank 21 holds separated liquid 30. Liquid 30 stored in tank 21 is conveyed to the inlet side of fuel pump 5 via a valve, which is not shown. Controller 7 controls the opening and closing of the valve so as to adjust the concentration of the methanol aqueous solution as the fuel.

A pair of metal electrodes 11 is disposed on the side surfaces of tank 21 opposed to each other. As shown in Fig. 1, electrodes 11 are connected to calculator 7A provided in controller 7. Calculator 7A measures the stored amount of liquid 30 based on a change in the capacitance between electrodes 11. For this purpose, it is preferable that tank 21 is made of a material having a small dielectric constant.

Controller 7 controls the flow rate of air pump 6 based on the stored amount of liquid 30, for example. This controls the amount of liquid 30 stored in tank 21 within a predetermined range. In this manner, electrodes 11 are used to measure the amount of liquid 30 in tank 21. If the stored amount of liquid 30 is excessively large, water leaks from separation unit 10. If the stored amount of liquid 30 is excessively small, the concentration of the fuel cannot be adjusted.

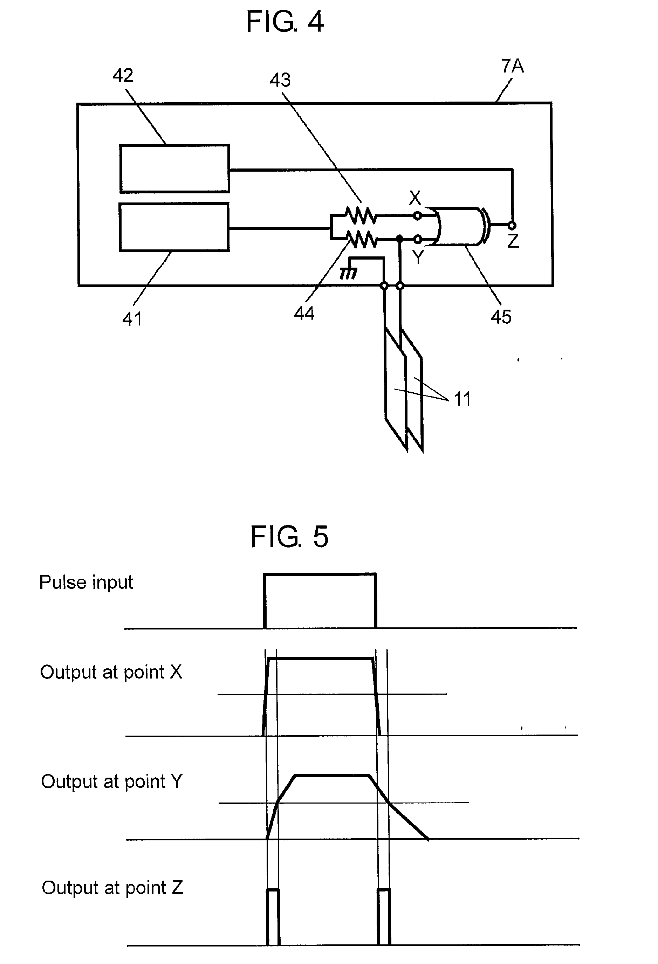

Here, a description is provided for a method for measuring the stored amount of liquid 30, based on a change in the capacitance between electrodes 11, with reference to Fig. 4 and Fig. 5. Fig. 4 is a block circuit diagram showing an example of the configuration of calculator 7A in the fuel cell system of Fig. 1. Fig. 5 is a waveform chart in the block circuit diagram of Fig. 4.

Electrical pulses generated in pulse generator 41 are input to resistors 43 and 44. The other end of each of resistors 43 and 44 is connected to the corresponding input terminal of exclusive OR gate 45. One of electrodes 11 is connected to the ground, and the other of electrodes 11 is connected between resistor 44 and the input terminal of exclusive OR gate 45. The output terminal of exclusive OR gate 45 is connected to pulse time measurement part 42.

In this configuration, as shown in Fig. 5, a signal is output at point X, i.e. the output of resistor 43, at substantially the same timing as that of the pulse signal input from pulse generator 41. On the other hand, at point Y, i.e. the output of resistor 44, the waveform is distorted by the capacitance between electrodes 11.

As the output at point Z, i.e. the output of exclusive OR gate 45, two pulses are output for each input pulse. That is, corresponding to a pulse output from pulse generator 41, a pulse having a width proportional to the capacitance between electrodes 11 is generated at both timings of the rising edge and the falling edge. Pulse time measurement part 42 measures these pulse widths, and thereby calculator 7A estimates the capacitance between electrodes 11. Further, the relational expression between the estimated capacitance and the amount of liquid 30 in tank 21 is prestored in calculator 7A. With this expression, calculator 7A calculates the amount of liquid 30 in tank 21.

The output at point X is slightly distorted by the input capacitance of exclusive OR gate 45 and the time constant of resistor 43. Similar distortion occurs in the output of resistor 44. Therefore, in order to cancel the error between these distortions and the distortion caused by the capacitance between electrodes 11, it is preferable to set the resistance values of resistors 43 and 44 as equal as possible.

The configuration of calculator 7A is not limited to the above, and other configurations may be used as long as the capacitance between electrodes 11 can be detected.

In the above description, calculator 7A measures the amount of liquid 30 stored in tank 21. However, instead of obtaining the stored amount, controller 7 may control the flow rate of air pump 6, for example, directly using the capacitance between electrodes 11.

Electrodes 11 also function to promote the heat dissipation of liquid 30 in tank 21. Thus, the evaporation of liquid 30 in tank 21 can be suppressed. This can suppress the excessive release of moisture from the fuel cell system to the outside.

Further, liquid 30 can be cooled to a suitable temperature so as to be reused in fuel cell stack 1. Typically, fuel cell stack 1 is operated at temperatures in the range of 55°C to 80°C. Fuel cell stack 1 generates reaction heat during operation. For this reason, in order to maintain heat balance, it is preferable to set the temperatures of the fuel and the air in the range of 15°C to 40°C, for example. Electrodes 11 promote the heat dissipation of liquid 30. Thereby, the temperature of the fuel can be kept in the above range even when liquid 30 is circulated and returned to fuel pump 5.

It is preferable that electrodes 11 are formed of copper or alloys thereof, or aluminum or alloys thereof, in terms of thermal conductivity. A sheet or a foil of these metals can be combined with tank 21 for use as each electrode. Alternatively, each electrode may be formed as a thin film by vapor deposition or other methods.

As shown in Fig. 3A, it is preferable that electrodes 11 are disposed over the entire surfaces of the side surfaces of tank 21. Electrodes 11 enlarged in this manner can promote the heat dissipation. Further, even when tank 21 tilts such that electrodes 11 are perpendicular to the surface of liquid 30, the amount of liquid 30 in tank 21 can be detected.

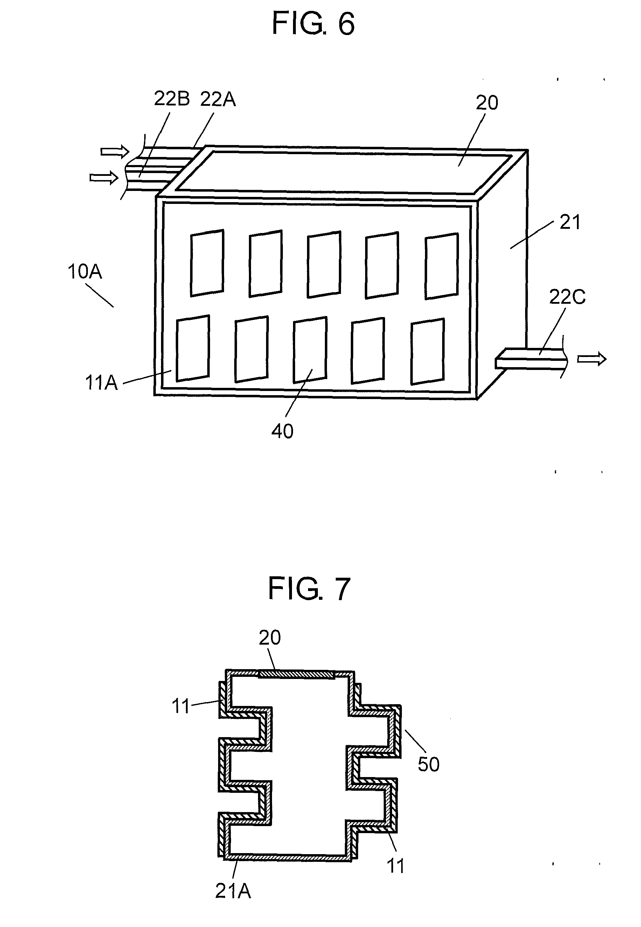

Next, a description is provided for preferable shapes of the tank and the electrodes, with reference to Fig. 6 through Fig. 9. Fig. 6 is a perspective view showing other electrodes for use in the fuel cell system in accordance with the exemplary embodiment of the present invention. Fig. 7 through Fig. 9 are vertical sectional views each showing another tank of the separation unit for use in the fuel cell system in accordance with the exemplary embodiment of the present invention.

Electrode 11A shown in Fig. 6 has fins 40 on the surface. Fins 40 increase the surface area of electrode 11A. Thereby, the heat dissipation of the liquid in tank 21 can be further promoted.

As shown in Fig. 7, recess-and-projection shape 50 is formed on each side surface of tank 21A on which the electrode is disposed. A pair of electrodes 11 is disposed along respective recess-and-projection shapes 50 of tank 21A. The surface area of electrodes 11 is increased by forming recess-and-projection shapes 50 on side surfaces of tank 21A in this manner. Thereby, the heat dissipation of the liquid in tank 21A can be further promoted.

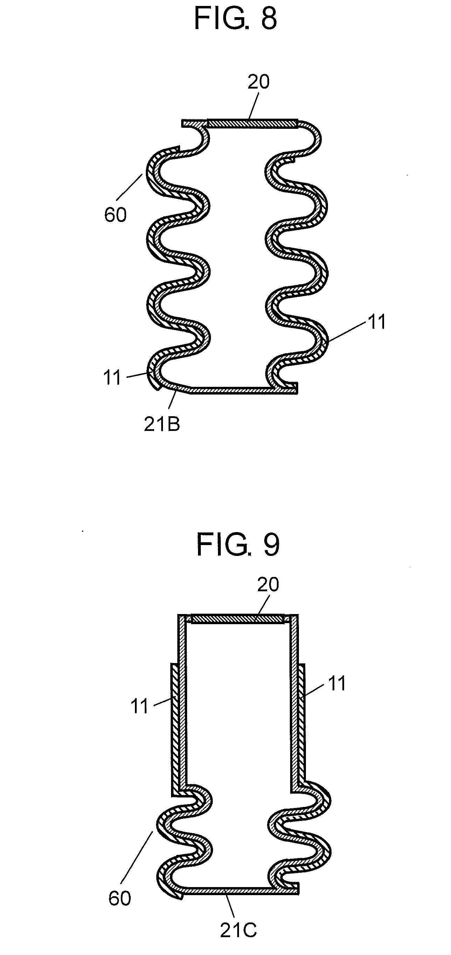

Instead of linear recess-and-projection shape 50 of Fig. 7, each side surface on which electrode 11 is disposed may have corrugated shape 60 as shown in Fig. 8. Also in this structure, a pair of electrodes 11 is disposed along respective corrugated shapes 60 of tank 21B.

In the structure of Fig. 9, corrugated shapes 60 are formed only in the lower part of tank 21C. A high-temperature liquid is always stored on the lower side of tank 21C. For this reason, it is preferable to form corrugated shapes 60 at least on the lower side of tank 21C. This is also applicable to the structure of Fig. 6 and the structure of Fig. 7. That is, it is preferable that fins 40 and recess-and-projection shapes 50 are disposed at least on the lower side of tanks 21 and 21A, i.e. on the lower side of the electrodes.

As described above, it is preferable that the use of various shapes makes the surface area of the electrodes larger than the projected area of the side surfaces of the tank on which the electrodes are disposed. These structures increase the surface area of the electrodes. Thereby, the heat dissipation of the liquid in the tank can be further promoted. With reference to Fig. 7, tank 21A has stepped recess-and-projection shapes 50 on the respective side surfaces. With reference to Fig. 8, tank 21B has corrugated shapes 60 on the respective side surfaces. However, the shapes of the side surfaces are not limited to these. For example, the shape of bellows may be used.

It is preferable that the space between the side surfaces on which electrodes 11 are disposed, i.e. the space between electrodes 11, is constant in the vertical direction of the tank. With this structure, the capacitance changes linearly with respect to the height of the liquid level. Thus, calculator 7A can calculate the height of the liquid level relatively easily.

As shown in Fig. 1, it is preferable that the fuel cell system further includes cooler 12 configured to cool electrodes 11. By positively cooling electrodes 11 with cooler 12, the heat dissipation of the liquid in the tank can be further promoted. Further, controller 7 controls the operation of cooler 12, and thereby the liquid in the tank can be cooled to a necessary extent. In this case, a temperature sensor is disposed in the tank and connected to controller 7 so that the operation strength of cooler 12 is controlled based on the detected temperature.

As such cooler 12, a fan (not shown) for blowing air to electrodes 11 can be used. With such a simple structure, the liquid in the tank can be cooled.

In this exemplary embodiment, a description is provided using a DMFC as an example. The structure of the present invention is applicable to any fuel cell that discharges gas-liquid mixed fluid. For example, the structure is applicable to a so-called polymer solid electrolyte fuel cell and reformed methanol fuel cell that use hydrogen as the fuel.

In the structure described in this exemplary embodiment, separation unit 10 receives substances discharged from anode electrodes 31 and cathode electrodes 32. The present invention is not limited to this structure. The separation unit may receive the substances discharged from either of the anode electrodes and the cathode electrodes, depending on the fuel, the gas containing the oxidizing agent, combinations thereof, the type of the fuel cell, or the like. Separation units 10 may be provided separately for the substances discharged from the anode electrodes and for those from the cathode electrodes.

### INDUSTRIAL APPLICABILITY

A fuel cell system of the present invention has a separation unit capable of separating gas-liquid mixed fluid discharged from the fuel cell stack. A pair of metal electrodes is disposed on the side surfaces of the tank of the separation unit. These electrodes are used to measure the amount of the liquid in the tank and promote the heat dissipation of the liquid in the tank. By controlling the stored amount and the temperature of the liquid to be circulated to the fuel supply side in this manner, the portability of the fuel cell system is improved. This fuel cell system is useful especially as an electric power supply for a small electronic device.

### REFERENCE MARKS IN THE DRAWINGS

- 1: Fuel cell stack
- 2: Positive electrode terminal
- 3: Negative electrode terminal
- 4: Fuel tank
- 5: Fuel pump
- 6: Air pump
- 7: Controller
- 7A: Calculator
- 8: Power storage unit
- 9: DC/DC converter
- 10: Separation unit
- 11, 11A: Electrode
- 12: Cooler
- 20: Gas-liquid separation membrane
- 21, 21A, 21B, 21C: Tank
- 22A, 22B: Introduction pipe
- 22C: Discharge pipe
- 30: Liquid
- 31: Anode electrode
- 31A, 32A: Diffusion layer
- 31B, 32B: Microporous layer (MPL)
- 31C, 32C: Catalyst layer
- 32: Cathode electrode
- 33: Electrolyte membrane
- 34: Separator
- 35: Membrane electrode assembly (MEA)
- 40: Fin
- 41: Pulse generator
- 42: Pulse time measurement part
- 43, 44: Resistor
- 45: Exclusive OR gate
- 50: Concave and convex shape
- 60: Corrugated shape

## Claims

1. A fuel cell system comprising:
a fuel cell stack including a membrane electrode assembly, the membrane electrode assembly being a laminate of an anode electrode, a cathode electrode, and an electrolyte membrane interposed between the anode electrode and the cathode electrode;
a first supplier configured to supply a fuel to the anode electrode;
a second supplier configured to supply a gas containing an oxidizing agent to the cathode electrode;
a separation unit including:
a gas-liquid separation membrane capable of separating liquid from gas-liquid mixed fluid formed of at least one of a reaction product generated in the anode electrode and a residue of the fuel, and a reaction product generated in the cathode electrode and the gas having passed through the cathode electrode; and
a tank configured to hold the separated liquid; and
a pair of metal electrodes disposed along respective side surfaces opposed to each other of the tank, the electrodes being used to measure an amount of the liquid in the tank and promoting heat dissipation of the liquid in the tank.

2. The fuel cell system according to claim 1, wherein a surface area of the metal electrodes is larger than a projected area of the side surfaces of the tank on which the respective metal electrodes are disposed.

3. The fuel cell system according to claim 2, wherein each of the metal electrodes has a fin.

4. The fuel cell system according to claim 3, wherein the fin is disposed at least on a lower side of the metal electrodes.

5. The fuel cell system according to claim 2, wherein each of the side surfaces of the tank on which the respective metal electrodes are disposed has a recess-and-projection shape, and each of the metal electrodes is disposed along the recess-and-projection shape.

6. The fuel cell system according to claim 5, wherein the recess-and-projection shape is formed at least on a lower side of the tank.

7. The fuel cell system according to claim 2, wherein each of the side surfaces of the tank on which the respective metal electrodes are disposed has a corrugated shape, and each of the metal electrodes is disposed along the corrugated shape.

8. The fuel cell system according to claim 7, wherein the corrugated shape is formed at least on a lower side of the tank.

9. The fuel cell system according to claim 1, wherein the metal electrodes are disposed on entire surfaces of the respective side surfaces of the tank.

10. The fuel cell system according to claim 1 further comprising a calculator connected to the metal electrodes and configured to measure an amount of the liquid in the tank.

11. The fuel cell system according to claim 1 further comprising a cooler configured to cool the metal electrodes.

12. The fuel cell system according to claim 11, wherein the cooler includes a fan configured to blow air to the metal electrodes.
